# EUROPEAN PATENT APPLICATION

(11) **EP 1 155 880 A2**
(43) Date of publication of application: **21.11.2001**
(21) Application number: 01830270.3
(22) Date of filing: 23.04.2001
(51) Int. Cl.: B60C 25/132

(54) **Machine used to mount and dismount tyres of motor vehicle wheels**

(30) Priority: 18.05.2000 IT AN200013
(71) Applicant: Mondolfo Ferro - S.P.A., 61027 Mondolfo (PS) (IT)
(72) Inventor: Petrolati, Liviano, 61037 Mondolfo (PU) (IT)
(74) Representative: Baldi, Claudio

(57) **Abstract**

The present invention relates to a machine used to mount and dismount tyres of motor vehicle wheels, which comprises means for the automatic blocking, when acting on the tyre bead, of the telescopic rods representing the support arms of the bead tools. Moreover, in this machine the arms (5) are pivoted in such a way that when acting on the tyre bead, the tools make an arc of a circle tangent to the edge of the rim and directed towards the bottom of the rim groove.

## Description

The present patent application for industrial invention relates to a machine used to mount and dismount tyres of motor vehicle wheels, of the type comprising a base from which a mandrel that rotates around a vertical axis protrudes, provided with a radial series of jaws used to grab the rim of the wheel. A bearing structure for the articulated arms supporting the tools used to mount and dismount tyres protrudes from the same base.

In particular, the machine according to the present invention comprises an assembly of traditional type, made up by an overlapping pair of telescopic arms that basically extend in horizontal direction and make alternated travels in vertical direction, guided by sliding bushes inserted on a single guide column.

Tools are mounted on the front end of the telescopic arms and pressed against the side of the tyre in order to detach it from the internal edge of the rim.

In this phase the overlapping pair of tool-holding arms moves closer in order to simultaneously actuate on the tyre sides from below and above.

Before acting on the tyre bead, the operator adjusts the length of the two telescopic arms as appropriate according to the dimensions of the wheel, so that the tools can actuate in the correct position on the side of the tyre.

It appears obvious that this type of machines need to be provided with stopping means in order to oppose the free sliding of the telescopic arms of the tool-holding arms once the operator has adjusted their height.

In the types of machine currently available on the market, these means are either automatic or manual. In the first case, the presence of powered means involves a noticeable increase in manufacturing costs, while in the second case, the manoeuvre for the activation or deactivation of these means is long and complicated.

The purpose of the present invention is to create a device for the automatic blocking of the telescopic rods of the tool-holding arms, which does not require the use of expensive actuators, while still providing automatic operation.

A further purpose of the present invention is to realise a machine in which the bead tools can be used not only to dismount the tyres, but also to mount them, when a high pressure must be made on the tyre side to push its bead against the bottom of the annular groove of the rim.

As a matter of fact, during the dismounting phase a specially designed tool is used to grab the tyre bead move it inside the rim edge, while dragged in slow rotation by the mandrel with jaws.

As mentioned earlier, while this tool acts on the bead, another tool is pressed against the tyre side to push it against the bottom of the annular groove of the rim.

This second tool is included in all the machines that are currently available on the market, which are therefore provided with three different types of tools:
- a first tool supported by an articulated arm that grabs the bead and moves it inside the edge of the rim;
- a second tool supported by an articulated arm that is pushed against the tyre side while the first tool is being used;
- two bead tools used to simultaneously detach the two tyre beads from the internal edge of the rim.

In all the machines that are currently available on the market the bead tools cannot be used in the place of the second tool, since the location of the telescopic arms is such that the field of action of the bead tools overlaps the field of action of the first tool, causing the physical interference between the first tool and the bead tools, if used together.

In view of the above, an additional purpose of the present invention is to devise a machine used to mount and dismount motor vehicle tyres in which the field of action of the bead tools does not coincide with the field of action of the first tool, in order to eliminate the second tool, whose function will be carried out by the bead tools that, for the first time, can be simultaneously used with the first tool.

Finally, it must be noted that another purpose of the present invention is to realise a new articulation system of the telescopic arms, so that the bead tool they support can be introduced between tyre and rim with the correct angle of attachment and complete its penetration travel without damaging the rim or tyre edge.

To this end, each telescopic arm is provided with a long oscillating bracket which is used to hinge the arm to a fixed counter-bracket. In this way, when acting on the tyre bead, each bead tool covers an arc of a circle, practically tangent to the external edge of the rim and directed towards the bottom of the rim groove.

For major clarity the description of the present invention continues with reference to the enclosed drawings, which are intended for purposes of illustration and not in a limiting sense, whereby:
- Fig. 1 is a side view of the machine according to the present invention;
- Fig. 2 is a top view of the machine according to the present invention, with a wheel - partially drawn - mounted on the mandrel used to grab and drag the wheel in slow rotation while mounting and dismounting the tyre;
- Fig. 3 is a view of the support and handling assembly of the telescopic arms on which the bead tools are mounted;
- Fig. 4 is a section of a telescopic arm with a plane passing through the longitudinal axis of the arm;
- Fig. 5 is an axonometric view of the articulation system of the two telescopic arms, in divaricate position, in idle state;
- Fig. 6 is the same as Fig. 5, with the only difference that the two telescopic arms are close to each other, in working position.

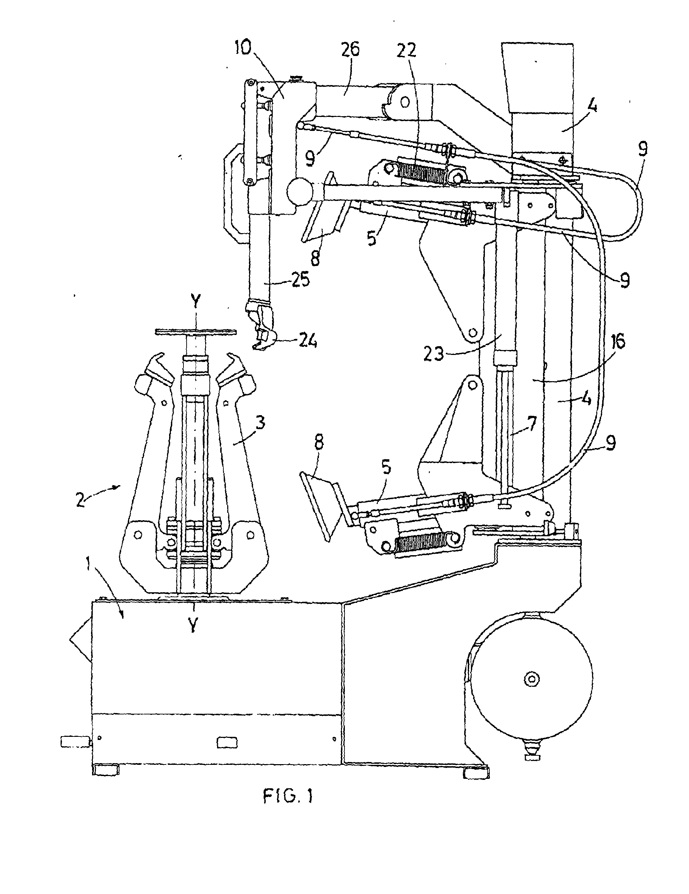

With reference to Fig. 1, the machine according to the present invention comprises a base (1) from which a mandrel (2) that rotates around a vertical axis Y-Y protrudes, provided with a radial series of jaws (3) used to grab the rim (C) of the wheel. A bearing structure (4) for the articulated arms supporting the tools used to mount and dismount tyres protrudes from the same base (1).

In particular, the machine according to the present invention comprises an assembly of traditional type, made up by an overlapping pair of telescopic arms (5) that basically extend in horizontal direction and make alternated travels in vertical direction, guided by sliding bushes (6) inserted on a single guide column (7) with circular section.

Each arm (5) is formed by an external tubular rod (5a), inside which a rod (5b) slides, on whose front end the bead tool is mounted. This tool consists in a truncated-conical roll (8) which is pressed against the side of the tyre (P) in order to detach it from the internal edge of the rim (C)

The rod (5b) automatically slides inside the rod (5a), according to the traditional technique, by means of flexible cables (9) that slide inside sheaths and are actuated by means of manipulators positioned on the control panel (10).

The first peculiarity of the machine according to the present invention is represented by the means used to oppose the free travel of the rod (5b) inside the rod (5a) when the telescopic arms (5) are pressed against the tyre sides.

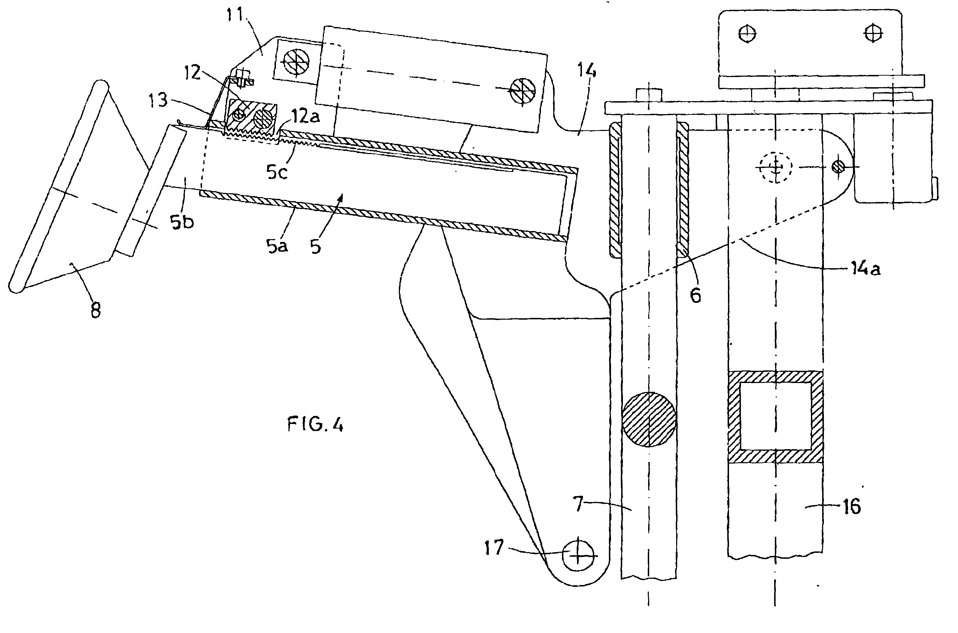

With particular reference to Fig. 4, it must be noted that a wing (11) is fixed on the external rod (5a) in lateral position. A toothed jaw (12) is pivoted on the wing (11) and the teeth of the jaw (12) can penetrate inside the rod (5a) through a slot (12a) located on the rod.

The internal rod (5b) features a section with toothed profile (5c) that opposes the free sliding of the rod (5b) until the profile (5c) remains engaged with the teeth of the jaw (12).

A flat spring (13) located immediately outside the opening of the rod (5a) laterally pushes the rod (5b) in such a direction that its profile (5c) is maintained far and disengaged from the teeth of the jaw (12).

When the rolls (8) are pressed against the sides of the tyre (P), the internal rod (5b) is pushed against the teeth of the jaw (12) and the toothed profile (5c) remains engaged until the arms (5) are in working position.

Another characteristic of the machine according to the present invention is represented by the articulation system of the telescopic arms (5), so that the roll (8) they support can be introduced between tyre (P) and (C) rim with the correct angle of attachment and complete its penetration travel without damaging the rim or tyre edge.

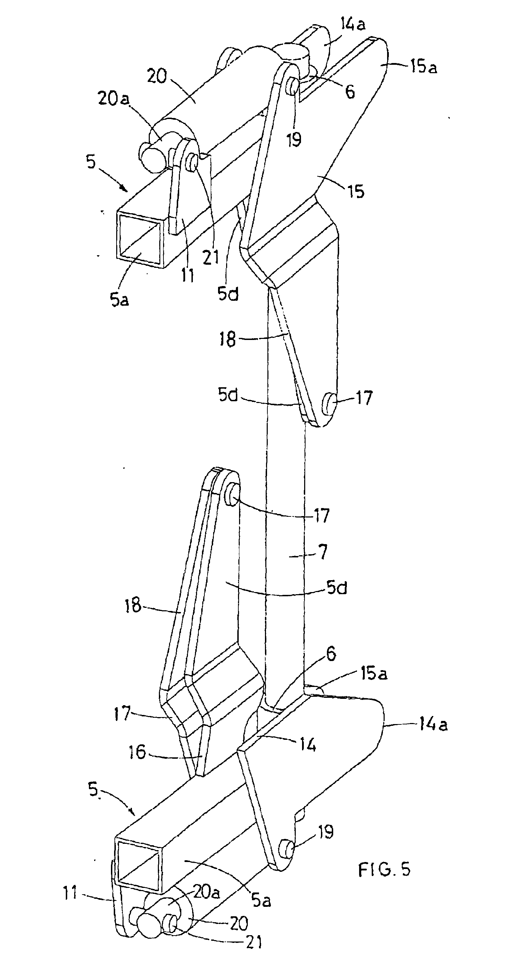

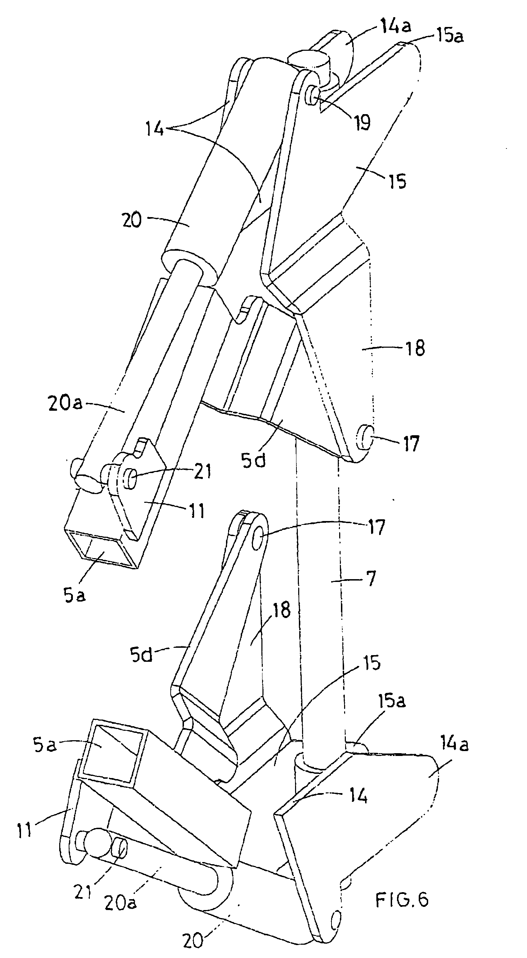

With reference to Figs. 5 and 6, it must be noted that a pair of diametrically opposed modelled plates (14 and 15) is welded on the outside of each sliding bush (6), ending in the rear with teeth (14a and 15a) that slide along a column (16) located in intermediate position between them, in order to oppose the free rotation of the bush (6) around the guide column (7).

The external rod (5a) of each telescopic arm (5) features a long bracket (5d) which is used to hinge the arm (5) by means of a pin (17) with horizontal axis to a fixed counter-bracket (18) joined to one of the two modelled plates (14 and 15).

The jacket (20) of a jack is pivoted with a pin (19) between each pair of modelled plates (14 and 15), whose stem (20a) is pivoted with a pin (21) to the wing (11), so that the actuation of the jack causes the rotation of the arm (5) around the pivoting pin (17).

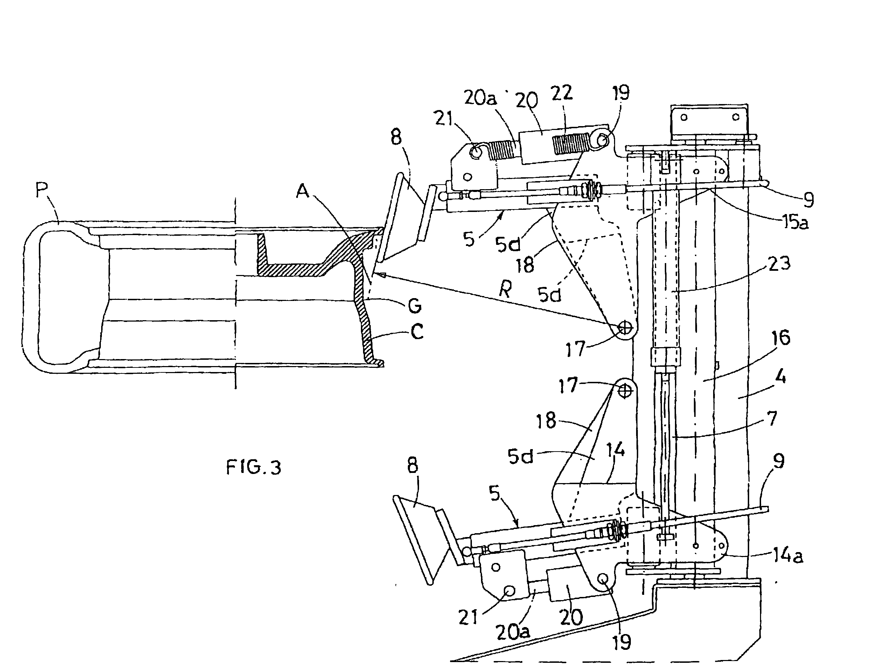

This means that when acting on the tyre bead, each roll (8) covers an arc of a circle (A) with radius (R) and centre on the pin (17); the arc (A) is almost tangent to the external edge of the rim (C) and directed towards the bottom of the groove (G) of the rim (C), as shown in Fig. 3.

The extension of the jack occurs by overcoming the antagonist strength of a return spring (22) - not shown in Figs. 5 and 6 - whose ends are hooked to the two pins (19 and 21).

Finally, attention is drawn on the fact that the pair of modelled plates (14 and 15) is mounted in upside down position on the telescopic arm (5), so that the bracket (5d) and the counter-bracket (18) of one arm (5) are positioned on one side of the column (7), and the bracket (5d) and the counter-bracket (18) of the other arm (5) are positioned on the opposite side of the column (7).

This allows to draw the sliding bushes (6) as close as possible, together with the telescopic arms (5). To this end, it must be noted that the alternated travels of the arms (5) along the guide column (7) are actuated by means of jacks (23) with vertical axis fixed to the two sides of the column (7), each of them fixed to the frame (4) on one side and to the plate (14) of the arm (5) on the other side.

The machine according to the present invention also comprises a tool (24) with traditional shape, used when mounting and dismounting tyres to grab the tyre bead and move it over the rim edge, towards the inside or outside, according to the operation to be carried out, i.e. mounting or dismounting the tyre.

This tool is applied on the base of a column (25) suspended to an articulated horizontal arm (26) that protrudes from the bearing frame (4).

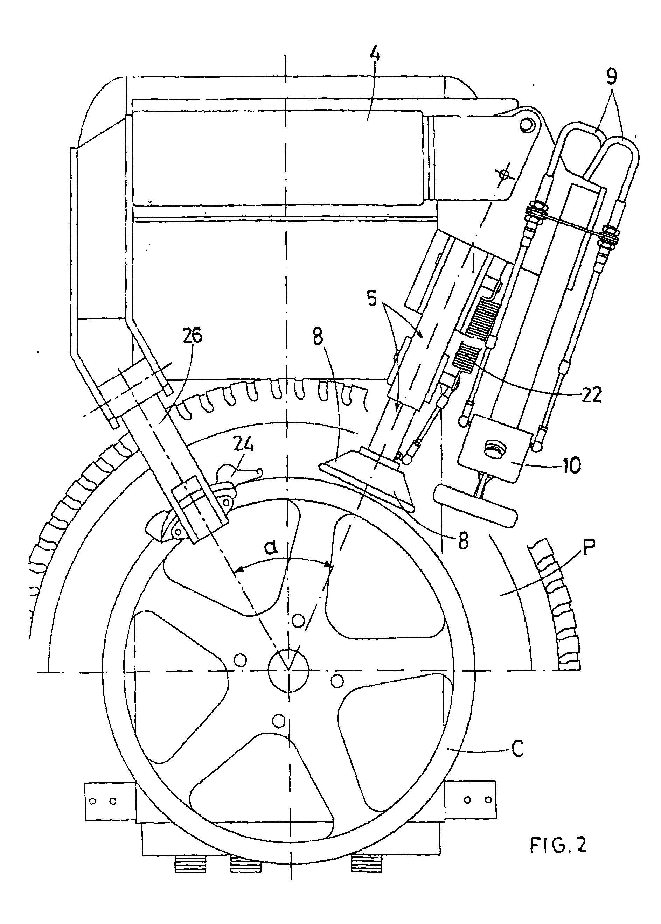

With particular reference to Fig. 2, it must be noted that the field of action of the rolls (8) on the tyre (P) is far enough from the field of action of the tool (24) in order to use both tools at the same time.

The non-interference between the rolls (8) and the tool (24) in case of simultaneous use is obtained thanks to the presence of a mismatch angle (α) between the vertical plane passing through the centre of the circle and the axis of the guide column (7) and the vertical plane passing through the centre of the circle and the axis of the column (25).

## Claims

1. A machine used to mount and dismount tyres of motor vehicle wheels, of the type comprising:
- a base (1) from which a mandrel (2) that rotates around a vertical axis Y-Y protrudes, provided with a radial series of jaws (3) used to grab the rim (C) of the wheel, and a bearing structure (4) for the articulated arms supporting the tools used to mount and dismount tyres;
- an assembly of traditional type, consisting in an overlapping pair of telescopic arms (5), made up by an external rod (5a) and an internal rod (5b), to which the rolls (8) are fixed, making alternated travels in vertical direction, actuated by jacks (23) and guided by sliding bushes (6) inserted on a single guide column (7) with circular section;
- a tool (24) with traditional shape, applied on the base of a column (25) suspended to an articulated horizontal arm (26) that protrudes from the bearing frame (4);
**characterised by** the fact that a wing (11) is fixed on the external rod (5a) of each arm (5) in lateral position, with a toothed jaw (12) pivoted on the wing (11), whose teeth can penetrate inside the rod (5a) through a slot (12a) located on the rod, while the internal rod (5b) features a section with toothed profile (5c) that is maintained far from the teeth of the jaw (12) by means of a flat spring (13) that is located immediately outside the opening of the rod (5a) and laterally pushes the rod (5b) in such a direction that its profile (5c) is maintained far and therefore disengaged from the teeth of the jaw (12).

2. A machine used to mount and dismount tyres of motor vehicle wheels, of the type comprising:
- a base (1) from which a mandrel (2) that rotates around a vertical axis Y-Y protrudes, provided with a radial series of jaws (3) used to grab the rim (C) of the wheel, and a bearing structure (4) for the articulated arms supporting the tools used to mount and dismount tyres;
- an assembly of traditional type, consisting in an overlapping pair of telescopic arms (5), made up by an external rod (5a) and an internal rod (5b), to which the rolls (8) are fixed, making alternated travels in vertical direction, actuated by jacks (23) and guided by sliding bushes (6) inserted on a single guide column (7) with circular section;
- a tool (24) with traditional shape, applied on the base of a column (25) suspended to an articulated horizontal arm (26) that protrudes from the bearing frame (4);
**characterised by** the fact that a pair of diametrically opposed modelled plates (14 and 15) is welded on the outside of each sliding bush (6), ending in the rear with teeth (14a and 15a) that slide along a column (16) located in intermediate position between them, while the external rod (5a) of each telescopic arm (5) features a long bracket (5d) which is used to hinge the arm (5) by means of a pin (17) with horizontal axis to a fixed counter-bracket (18) joined to one of the two modelled plates (14 and 15), between which the jacket (20) of a jack is pivoted with a pin (19), whose stem (20a) is pivoted with a pin (21) to the wing (11) fixed on the external rod (5a) of the arms (5); with the presence of a return spring (22), whose ends are hooked to the two pins (19 and 21); it also being provided that the length of the bracket (5d) is such that the rolls (8) cover an arc of a circle (A) tangent to the external edge of the rim (C) and directed towards the bottom of the groove (G) of the rim (C) during the rotation of the arms (5) around the pivoting pins (17).

3. A machine according to claim 2, **characterised by** the fact that the pair of modelled plates (14 and 15) is mounted in upside down position on the telescopic arm (5), so that the bracket (5d) and the counter-bracket (18) of one arm (5) are positioned on one side of the column (7), and the bracket (5d) and the counter-bracket (18) of the other arm (5) are positioned on the opposite side of the column (7).

4. A machine according to the previous claims, **characterised by** the presence of a angle (α) between the vertical plane passing through the centre of the circle (C) and the axis of the guide column (7) and the vertical plane passing through the centre of the circle and the axis of the column (25), such that the field of action of the rolls (8) on the tyre (P) is far enough from the field of action of the tool (24), thus allowing to simultaneously use the rolls (8) and the tool (24).
